# EUROPÄISCHE PATENTSCHRIFT

(11) **EP 3 515 767 B1**
(45) Veröffentlichungstag und Bekanntmachung des Hinweises auf die Patenterteilung: **11.11.2020**
(21) Anmeldenummer: 17755499.5
(22) Anmeldetag: 21.08.2017
(51) Int. Cl.: B60T 11/34, B60T 17/00, B60T 17/04

(54) **DRUCKREGELVENTIL FÜR EIN LUFTAUFBEREITUNGSSYSTEM EINES NUTZFAHRZEUGS**
PRESSURE REGULATION VALVE FOR AN AIR SUPPLY SYSTEM IN A COMMERCIAL VEHICLE
SOUPAPE DE RÉGULATION DE PRESSION D'UN SYSTÈME DE TRAITEMENT D'AIR DANS UN VÉHICULE UTILITAIRE

(30) Priorität: 19.09.2016 DE 102016117607
(43) Veröffentlichungstag der Anmeldung: 31.07.2019
(73) Patentinhaber: KNORR-BREMSE Systeme für Nutzfahrzeuge GmbH, 80809 München (DE)
(72) Erfinder: RATATICS, Gabor, 6034 Helvecia (HU); MARKOS, Peter, 6000 Kecskemet (HU); BERCZY, Gergely, 6000 Kecskemet (HU)
(86) Internationale Anmeldenummer: PCT/EP2017/071061
(87) Internationale Veröffentlichungsnummer: WO 2018/050400

(56) Entgegenhaltungen:
- EP-A1- 2 444 291
- WO-A1-2012/079698
- DE-A1- 4 012 576

## Beschreibung

Die vorliegende Erfindung betrifft ein Druckregelventil für ein Luftaufbereitungssystem eines Nutzfahrzeugs, das einen Druckregelkolben umfasst, der einen Zapfen aufweist, welcher sich aus einer pneumatischen Wirkfläche des Druckregelkolbens erhebt und an dessen Ende sich eine zweite pneumatische Wirkfläche befindet.

Aus dem Stand der Technik sind bereits eine Mehrzahl an Druckregelventilen für Luftaufbereitungssysteme eines Nutzfahrzeugs bekannt. Diese Druckregelventile weisen jedoch eine hohe Systemkomplexität sowie viele zueinander bewegte- und abzudichtende Ventilelemente auf.

So zeigt beispielsweise die DE 42 34 626 (A1), insbesondere in Fig. 2, ein druckgesteuertes Ventil, ein Druckregelventil für Luftfederanlagen von Nutzfahrzeugen.

Im Übrigen zeigt die DE 10 2005 057 004 (B3) ein Druckregelventil 20 für eine Druckluftaufbereitungseinrichtung 10 für ein Nutzfahrzeug.

Weitere gattungsgemäße Druckbegrenzungsventileinrichtungen sind in der DE 40 12 576 (A1), der DE 10 2008 063 819 (A1), der DE 10 2008 053 994 (A1), der EP 1 364 849 (A2) und der DE 43 44 416 (A1) offenbart.

Ferner zeigt die EP 2 444 291 (A1) ein Betriebsbremsventil einer pneumatischen oder einer elektropneumatischen Fahrzeugbremsanlage.

Im Übrigen offenbart die WO 2012/079698 (A1) eine Druckluftversorgungsanlage zum Betreiben einer Pneumatikanlage, insbesondere einer Luftfederanlage eines Fahrzeugs ist. Zudem ist darin ein Verfahren zum Betreiben dieser Druckluftversorgungsanlage und ein pneumatisches System aufweisend diese Druckluftversorgungsanlage offenbart.

Es ist daher die Aufgabe der vorliegenden Erfindung ein Druckregelventil für ein Luftaufbereitungssystem eines Nutzfahrzeugs der eingangs genannten Art in vorteilhafterweise weiterzubilden, insbesondere dahingehend, dass sich dessen struktureller Aufbau vereinfacht und somit weniger Teile benötigt werden.

Diese Aufgabe wird erfindungsgemäß gelöst durch ein Druckregelventil mit den Merkmalen des Anspruchs 1. Danach ist vorgesehen, dass ein Druckregelventil für ein Luftaufbereitungssystem eines Nutzfahrzeugs mit einem Gehäuse, mit wenigstens einem Druckluftanschluss und mit wenigstens einer ersten Druckregelkammer vorgesehen ist, in die der Druckanschluss mündet, wobei die Druckregelkammer ein variables Volumen hat, das durch wenigstens einen Wandabschnitt des Gehäuses und eine erste pneumatische Wirkfläche eines verschieblich im Gehäuse geführten Druckregelkolbens begrenzt wird, wobei weiter ein erster Regelkanal vorgesehen ist, der in wenigstens einer ersten Stellung des Druckregelkolbens nicht mit der Druckregelkammer verbunden ist und in wenigstens einer zweiten Stellung des Druckregelkolben mit der Druckregelkammer verbunden ist, wobei der Druckregelkolben weiter einen Zapfen aufweist, der sich aus der ersten pneumatischen Wirkfläche des Druckregelkolbens erhebt und an dessen Ende sich eine zweite pneumatische Wirkfläche befindet, wobei der Zapfen pneumatisch abgedichtet durch den Wandabschnitt beweglich hindurchgeführt ist.

Die Erfindung basiert auf dem Grundgedanken, den ersten Regelkanal, welcher die Druckregelkammer über eine Gehäusekammer und einen zweiten Regelkanal mit der Ablassventilkammer verbindet innerhalb des Druckregelventilgehäuses anzuordnen sowie den Zapfen des Druckregelkolbens pneumatischen abgedichtet durch einen zentral angeordneten Wandabschnitt des Gehäuses hindurchzuführen. Durch die gehäuseseitige Anordnung des ersten Regelkanals kann darauf verzichtet werden, diesen durch bewegte Ventilelemente (wie zum Beispiel der Druckregelkolben) zu führen. Dadurch vereinfacht sich die Abdichtung des Druckregelkolbens bzw. des Zapfens erheblich und es kann auf mindestens eine Dichtungseinrichtung verzichtet werden. Außerdem kann durch das bewegliche Hindurchführen des Zapfens durch den Wandabschnitt des Gehäuses eine zusätzliche zweite pneumatische Wirkfläche des Druckregelkolbens an der Stirnseite des Zapfens vorgesehen werden, die mit der Ablassventilkammer wirkverbunden ist. Aufgrund dieses strukturellen Aufbaus des Druckregelkolbens, der mittels seiner ersten pneumatischen Wirkfläche mit der Druckregelkammer wirkverbunden ist und mittels seiner zweiten pneumatischen Wirkfläche entsprechend mit der Ablassventilkammer verbunden ist, kann eine ausreichend große Hysterie des Druckregelventils bereitgestellt werden. Somit kann bei jedem Betriebszustand des Druckregelventils eine definierte und sichere Druckregelung gewährleistet werden.

In diesem Zusammenhang ist ferner vorstellbar, dass die erste pneumatische Wirkfläche und die zweite pneumatische Wirkfläche auf derselben Seite des Druckregelkolbens angeordnet sind. Mittels dieser Anordnung der ersten und zweiten pneumatischen Wirkfläche können die Druckregelkammer sowie die Ablassventilkammer innerhalb des gemeinsamen Gehäuses nebeneinander, lediglich durch den Wandabschnitt, durch den der Zapfen hindurchgeführt ist, sehr platzsparend angeordnet werden.

Im Übrigen kann vorgesehen sein, dass die erste pneumatische Wirkfläche und die zweite pneumatische Wirkfläche dieselbe Ausrichtung haben. Die Ausrichtung kann im Wesentlichen koplanar erfolgen. Dadurch ergibt sich eine definierte Druckkraftverteilung auf die erste und zweite pneumatische Wirkfläche des Druckregelkolbens.

Ferner kann vorgesehen sein, dass die zweite pneumatische Wirkfläche des Druckregelkolbens in eine Ablassventilkammer hineinragt. Diese strukturelle Anordnung bietet insbesondere die Möglichkeit, den Druckregelkolben sowie den Entlastungsventilkolben im Wesentlichen koaxial zueinander im Gehäuse anzuordnen, woraus ein sehr kompaktes Gehäuse des Druckregelventils und Entlastungsventils resultiert. Im Übrigen verlängert sich aufgrund des Hineinragens die Länge des Zapfens, wodurch sich der Verschleiß zwischen der Dichtung des Wandabschnitts und des Zapfens deutlich verringert, da die scharfe Umlaufkante der zweiten pneumatischen Wirkfläche des Zapfens bei dessen axialer Bewegung nicht mit der Dichtung des Wandabschnitts in Berührung kommt. Einen weiterer Vorteil des verlängerten Zapfens ist die genauere axiale Führung des Zapfens bzw. Druckregelkolbens innerhalb des zugehörigen Wandabschnitts während einer axialen Bewegung.

Weiterhing kann denkbar sein, dass der Druckregelkolben eine radiale Außenfläche aufweist, in der Be- oder Entlüftungskanäle und Führungsflächen angeordnet sind. Die Be- oder Entlüftungskanäle sind für eine eindeutige Funktionserfüllung des Druckregelventils unerlässlich. Denn sie gewährleisten eine sichere Entlüftung der Ablassventilkammer, wenn sich der Druckregelkolben in einer ersten Stellung befindet. Diese Entlüftungsfunktion ergibt sich jedoch nur in der ersten Stellung des Druckregelkolbens, da die Dichtung des Druckregelkolbens ab einer ausreichend großen axialen Verschiebung eine Verbindung zwischen den Be- oder Entlüftungskanälen und dem ersten Regelkanal abgedichtet. Aufgrund der Führungsflächen des Druckregelkolbens kann bei einer richtig ausgeführten Tolerierung der Führungsflächen sowie des zugehörigen Wandabschnitts eine präzise axiale Führung des Druckregelkolbens innerhalb des zugehörigen Wandabschnitts realisiert werden.

Ferner ist vorstellbar, dass die pneumatische Abdichtung durch einen Dichtring, insbesondere einen O-Ring oder einen aufvulkanisierten Dichtring, ausgebildet ist. Gummibasierte O-Ringe bilden bei relativ zueinander bewegten Wirkflächenpaarungen bei Druckluftventilen aller Art eine zuverlässige und vielfach bewährte Abdichtungsmöglichkeit. Durch das Aufvulkanisieren eines derartigen Dichtrings beispielsweise auf die äußere Mantelfläche des Druckregelkolbens kann eine weitere Erhöhung der Funktionssicherheit sowie einer Vereinfachung der Fertigung des Druckregelkolbens erreicht werden, da die Verbindung zwischen Dichtring und Druckregelkolben in diesem Falle nicht durch eine dafür vorgesehene Nut realisiert wird, sondern durch eine feste Verbindung der beiden Bauteile.

Weiterhin kann vorgesehen sein, dass zwischen der Wand der Druckregelkammer, die durch das Gehäuse ausgebildet ist, und dem Druckregelkolben eine mehrteilige Dichtung vorgesehen ist. Insbesondere, wenn z.B. der Druckregelkolben sich durch seine axiale Bewegung von der ersten in die zweite Stellung bewegt, überstreift die Dichtung des Druckregelkolbens bei jedem Stellungswechsel die Öffnung des ersten Regelkanals, der in die Gehäusewand der Druckregelkammer mündet. Das regelmäßige Überstreifen der im Wandabschnitt angeordneten Öffnung des ersten Regelkanals erzeugt einen erhöhten Verschleiß der Dichtung des Druckregelkolbens. Daher muss die Dichtung neben der ihr zugeordneten Hauptfunktion, nämlich der Abdichtung von Druckregelkolben und zugehörigem Wandabschnitt des Gehäuses, zusätzlich die Nebenfunktion der Erhöhung des Verschleißwiderstandes erfüllen. Für die Kombination der Haupt- und Nebenfunktion kann es im Sinne der Erhöhung der Betriebssicherheit des Druckregelventils besonders vorteilhaft sein, die Abdichtung von Druckregelkolben und Wandabschnitt durch eine mehrteilige Dichtung zu realisieren.

In diesem Zusammenhang kann es insbesondere vorgesehen sein, dass die mehrteilige Dichtung wenigstens einen Außenring und einen Innenring aufweist. Um dem erhöhten Verschließ entgegenzuwirken und gleichzeitig dennoch die Komplexität der mehrteiligen Dichtung nicht unnötig zu erhöhen, bietet eine zweiteilige Dichtung diesbezüglich einen sehr guten Kompromiss. So kann beispielsweise der äußere Ring der zweiteiligen Dichtung aus einem verschleißbeständigeren Material ausgebildet sein als der innere Ring der mehrteiligen Dichtung. Letzterer ist in dieser Konstellation aufgrund seiner Elastizität vorwiegend für eine ausreichende Anpresskraft des äußeren Dichtrings an den entsprechenden Wandabschnitt zuständig.

Im Übrigen kann vorgesehen sein, dass der Außenring ein Hartdichtring ist und dass der Innenring ein gummiartiger Dichtring ist, insbesondere wobei der Hartdichtring ein Teflon- und/oder Kunststoffring ist und insbesondere wobei der Innenring ein O-Ring, beispielsweise ein Silikon- oder Gummi-O-Ring ist. Der Einsatz eines Teflon-und/oder Kunststoffrings kann neben einer vorteilhaften Dichtwirkung bzw. Verschleißwiderstand zusätzlich zu einer Verringerung der Reibung zwischen der Oberfläche des äußeren Rings und dem zugehörigen Wandabschnitt des Gehäuses erzielen. Der Silikon- oder Gummi-O-Ring dient aufgrund seiner elastischen Eigenschaften vorwiegend dazu, den äußeren Ring mit einer hinreichend großen Anpresskraft zur Realisierung der Dichtwirkung gegen den entsprechenden Wandabschnitt des Gehäuses zu drücken.

Ferner kann in diesem Zusammenhang vorstellbar sein, dass der Druckregelkolben eine Radialnut aufweist, in der die mehrteilige Dichtung geführt ist. Durch das Vorsehen der Radialnut an der Mantelfläche des Druckregelkolbens kann die mehrteilige Dichtung sicher, insbesondere während dem Überstreifen der im Wandabschnitt angeordneten Öffnung des ersten Regelkanals, am Wandabschnitt anliegen und so zur Erhöhung der Betriebssicherheit des Druckregelventils beitragen.

Außerdem kann vorgesehen sein, dass die Radialnut im Nutgrund eine pneumatische Verbindung aufweist, so dass eine pneumatische Verbindung zwischen Druckregelkammer und Radialnut herstellbar ist. Aufgrund der pneumatischen Verbindung zwischen dem Nutgrund und der Druckregelkammer kann die Dichtung des Druckregelkolbens mit Druckluft beaufschlagt werden, so dass die Dichtwirkung aufgrund der so resultierenden höheren Anpresskraft der Dichtung an den Wandabschnitt weiter erhöht wird, was zu einem zusätzlichen positiven Einfluss auf die Funktionssicherheit des Druckregelventils führt.

Insbesondere kann vorgesehen sein, dass die pneumatische Verbindung derart angeordnet ist, dass im montierten und betriebsfähigen Zustand des Druckregelventils die mehrteilige Dichtung durch den Druck aus der Druckregelkammer radial nach außen drückbar ist. Diese pneumatische Verbindung erweist sich neben der Verbesserung der Dichtwirkung insbesondere dann als vorteilhaft, wenn der elastische Innenring der mehrteiligen Dichtung aufgrund der unvermeidbaren Alterung des elastischen Gummi-oder Silikonwerkstoffs nicht mehr die volle Anpresskraft auf den äußeren Ring mit der Zeit aufprägen kann.

Im Übrigen ist denkbar, dass der Druckregelkolben einstückig ausgebildet ist. Neben der verringerten Teileanzahl lässt sich ein einstückig ausgebildeter Druckregelkolben einfacher und kostengünstiger fertigen und weist zudem eine höhere mechanische Steifigkeit auf.

Weitere Einzelheiten und Vorteile der Erfindung sollen nun anhand der in den Zeichnungen dargestellten Ausführungsbeispiele näher erläutert werden.

Es zeigen:
- Fig. 1: eine schematische Querschnittsansicht eines Ausführungsbeispiels einer Anordnung eines erfindungsgemäßen Druckregelventils sowie eines erfindungsgemäßen Entlastungsventils in einem gemeinsamen Gehäuse;
- Fig. 2: eine schematische perspektivische Ansicht eines ersten Ausführungsbeispiels eines erfindungsgemäßen Druckregelkolbens des Druckregelventils;
- Fig. 3: eine schematische Querschnittsansicht des ersten Ausführungsbeispiels des Druckregelkolbens des Druckregelventils;
- Fig. 4: eine schematische Querschnittsansicht eines zweiten Ausführungsbeispiels eines erfindungsgemäßen Druckregelkolbens des Druckregelventils; und
- Fig. 5: eine pneumatische Schaltungsanordnung des Druckregelventils sowie des Entlastungsventils gemäß Fig. 1 innerhalb eines Ausführungsbeispiels eines erfindungsgemäßen Luftaufbereitungssystems.

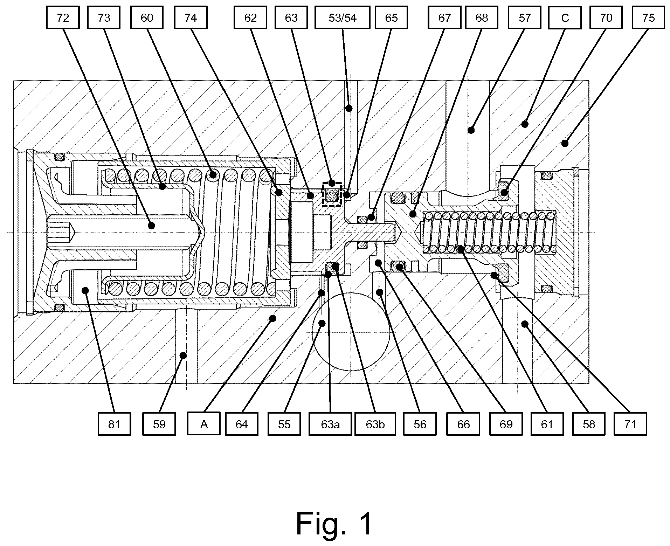

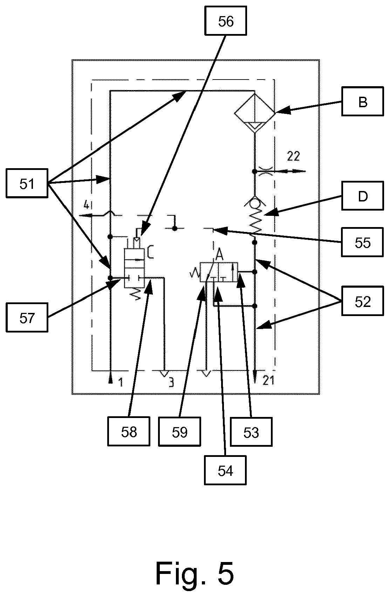

**Fig. 1** zeigt eine schematische Querschnittsansicht eines Ausführungsbeispiels einer Anordnung eines erfindungsgemäßen Druckregelventils A sowie eines erfindungsgemäßen Entlastungsventils C in einem gemeinsamen Gehäuse 75 (vgl. auch Fig. 5).

Das Druckregelventil A für ein Luftaufbereitungssystem eines Nutzfahrzeugs weist neben einem Gehäuse 75 einen Druckluftanschluss 53, 54 auf. Der Druckluftanschluss 53, 54 ist dabei als radiale Bohrung innerhalb des Gehäuses 75 vorgesehen.

Ferner umfasst das Druckregelventil eine erste Druckregelkammer 65, in die der Druckanschluss 53, 54 mündet. Die Druckregelkammer 65 ist im Wesentlichen als ringförmige Kammer im Gehäuse 75 ausgeformt, deren Mittelachse koaxial zur Mittelachse des Gehäuses 75 ausgerichtet ist.

Die Druckregelkammer 65 weist ferner ein variables Volumen auf. Das Volumen der Druckregelkammer wird durch einen Wandabschnitt des Gehäuses 75 und eine erste pneumatische Wirkfläche 78 eines verschieblich im Gehäuse 75 geführten Druckregelkolbens 62 begrenzt. Der zuvor angesprochene Wandabschnitt des Gehäuses 75 ist gemäß Fig. 1 als derjenige Wandabschnitt anzusehen, innerhalb welchem die radialen Außenflächen des Druckregelkolbens 62 (und des Zapfens 79) geführt werden.

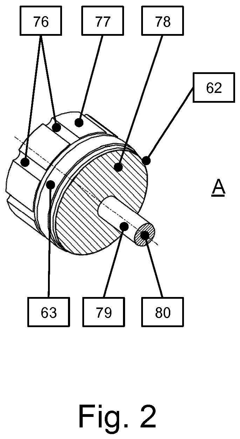

Folglich umfasst der Druckregelkolben 62 ferner einen Zapfen 79, der sich aus der ersten pneumatischen Wirkfläche 78 des Druckregelkolbens 62 erhebt. Zudem ist der Druckregelkolben 62 einstückig ausgebildet. Am Ende des Zapfens 79 (vgl. Fig. 2) befindet sich eine zweite pneumatische Wirkfläche 80.
Ferner sind die erste pneumatische Wirkfläche 78 und die zweite pneumatische Wirkfläche 80 auf derselben Seite des Druckregelkolbens 62 angeordnet. Gemäß Fig. 1 haben außerdem erste pneumatische Wirkfläche 78 und die zweite pneumatische Wirkfläche 80 dieselbe Ausrichtung. Sie sind im Wesentlichen koplanar angeordnet.

Zudem ist der Zapfen 79 pneumatisch abgedichtet durch den Wandabschnitt beweglich hindurchgeführt. Innerhalb des Wandabschnitts ist der Zapfen 79 mittels eines im Gehäuseabschnitt angeordneten Dichtrings 67 pneumatisch abgedichtet. Die pneumatische Abdichtung durch einen Dichtring 67 ist gemäß Fig. 1 mittels eines O-Rings ausgebildet.

Ferner ist zwischen der Wand der Druckregelkammer 65, die durch das Gehäuse 75 ausgebildet ist, und dem Druckregelkolben 62 eine mehrteilige Dichtung 63 vorgesehen. Diese mehrteilige Dichtung besteht im Wesentlichen aus einem Innenring 63b und einem Außenring 63a. Die mehrteilige Dichtung kann jedoch auch mehr als zwei Dichtringe umfassen. Allerdings kann die pneumatische Abdichtung auch mittels eines aufvulkanisierten Dichtrings oder anderen gängigen Dichtungen ausgebildet sein. Dies gilt Im Übrigen auch für sämtliche anderen hierin beschriebenen Dichtungen.

Das Druckregelventil A weist ferner einen im Gehäuse 75 verschieblich geführten Federaufnahmetopf 74 auf. Das im montierten Zustand des Druckregelventils A dem Druckregelkolben 62 zugewandte Ende des Federaufnahmetopfs 74 liegt planar an demjenigen Ende des Druckregelkolbens 62 an, das wiederum dem Federaufnahmetopf 74 zugewandt ist.

Innerhalb des Federaufnahmetopfs 74 ist eine Feder 60 angeordnet. Ein erstes Ende der Feder 60 ist im Bereich des offenen Endes des Federaufnahmetopfs 74 mittels eines Federtellers 73 axial und radial gelagert. Die Feder 60 erstreckt sich ferner innerhalb des Federaufnahmetopfs 74 bis zu ihrem zweiten Ende, das an einem in einer im Federaufnahmetopf 74 vorgesehenen Aufnahme axial und radial gelagert ist.

In einer mittigen Position am Federteller 73 steht dieser ferner mit einer Einstellschraube 72 in Verbindung. Die Einstellschraube 72 ist zentral in einen Gehäuseeinsatz geschraubt, der über einen Sicherungsring axial im Gehäuse 75 befestigt ist.

Im Gehäuseeinsatz ist zusätzlich eine Federkammer 81 vorgesehen, die durch die Innenstruktur des Gehäuseeinsatzes sowie das offene Ende des Federaufnahmetopfs 74 begrenzt wird. Ferner auf weist der Gehäuseeinsatz eine innere Ringfläche auf, an welche das offene Ende des Federaufnahmetopfs 74 anschlagbar ist.

Das Druckregelventil A umfasst außerdem einen Entlüftungsanschluss 59, der sich in Form einer Bohrung radial und im Wesentlichen senkrecht zu der Mittelachse des Gehäuses 75 von dessen Außenseite bis zu der Gehäusebohrung zur Aufnahme des Federaufnahmetopfs 74 erstreckt.

Die Feder 60 ist im vorliegenden Ausführungsbeispiel als Spiralfeder ausgeführt. Die Ausgestaltung der Feder 60 ist jedoch nicht auf die Form einer Spiralfeder beschränkt, sondern kann durch jegliche dem Fachmann in diesem Zusammenhang geläufigen elastischen Elemente umgesetzt werden.

Im Druckregelventil A ist weiter ein erster Regelkanal 64 vorgesehen. Der erste Regelkanal 64 ist im Gehäuse 75 angeordnet und mündet mittels einer Öffnung in den Wandabschnitt, in dem der Druckregelkolben 62 verschieblich geführt ist. Der Regelkanal 64 erstreckt sich ebenfalls im Wesentlichen senkrecht zu der Mittelachse des Gehäuses 75 und mündet ferner in eine Gehäusekammer 55.

Die Gehäusekammer 55 ist (vgl. Fig. 1) die strukturelle Schnittstelle zwischen dem Druckregelventil A und dem Entlastungsventil C. Im vorliegenden Ausführungsbeispiel teilen sich das Druckregelventil A und das Entlastungsventil C das gemeinsame Gehäuse 75. Dieser strukturelle Aufbau stellt allerdings nur eine von einer Vielzahl an Möglichkeiten dar, das Druckregelventil A und das Entlastungsventil C miteinander zu verknüpfen. Von der Gehäusekammer 55 aus erstreckt sich ein zweiter Regelkanal 56 bis zu einer Ablassventilkammer 66 des Entlastungsventils C.

In diesem Zusammenhang ist es beispielsweise ebenso möglich, das Druckregelventil A und das Entlastungsventil C innerhalb getrennter Gehäuse anzuordnen und beide Ventile über die Gehäusekammer 55 sowie die zweite pneumatische Wirkfläche 80 entsprechend mit der Ablassventilkammer 66 des Entlastungsventils C zu verbinden (vgl. auch Fig. 5).

In Fig. 1 ist ersichtlich, dass die zweite pneumatische Wirkfläche 80 des Druckregelkolbens 62 in eine Ablassventilkammer 66 hineinragt. Der Zapfen 79 ragt ferner in eine entsprechende Öffnung eines Entlastungsventilkolben 68 hinein, der zusätzlich zu einer zentral im Gehäuse 75 angeordneten axialen Aufnahmebohrung die Ablassventilkammer 66 begrenzt. Der Entlastungsventilkolben 68 ist innerhalb der zentral angeordneten axialen Aufnahmebohrung des Gehäuses 75 verschieblich geführt. Im Übrigen ist der Entlastungsventilkolben 68 über einen Dichtring 69 gegenüber der Ablassventilkammer 66 abgedichtet.

Das dem Zapfen 79 abgewandte Ende des Entlastungsventilkolbens 68 bildet zusammen mit einem entsprechenden Gehäusevorsprung am Ende der zentral angeordneten axialen Aufnahmebohrung einen Ventilsitz 71. Zur Abdichtung des Ventilsitzes 71 ist zudem eine Dichtscheibe 70 vorgesehen, die im zuvor angesprochenen Ende des Entlastungsventilkolben 68 in einer entsprechenden Ausformung angeordnet ist.

Im Inneren des Entlastungsventilkolbens 68 befindet sich weiterhin eine Feder 61, die sich zumindest teilweise innerhalb des Entlastungsventilkolbens 68 bis zu einem weiteren Gehäuseeinsatz erstreckt, der sie begrenzt sowie axial und radial lagert.

Im Übrigen weist das Gehäuse 75 im Bereich des Entlastungsventils C einen radial angeordneten Einlassanschluss 57 auf (vgl. Fig. 5). Der Einlassanschluss 57 erstreckt sich radial von der Außenseite des Gehäuses 75 im Wesentlichen senkrecht zu dessen Mittellinie bis zu der zentralen axial angeordneten Aufnahmebohrung, in welcher der Entlastungsventilkolben 68 verschieblich geführt ist.

Weiter weist das Gehäuse 75 im Bereich des Entlastungsventils C einen radial angeordneten Auslassanschluss 58 auf.

Fig. 2 zeigt ferner eine schematische perspektivische Ansicht eines ersten Ausführungsbeispiels eines erfindungsgemäßen Druckregelkolbens 62 des Druckregelventils A (vgl. auch Fig. 5).

Wie bereits vorstehend erläutert, umfasst der Druckregelkolben 62 eine mehrteilige Dichtung 63 sowie einen Zapfen 79, der sich aus der ersten pneumatischen Wirkfläche 78 des Druckregelkolbens 62 erhebt und an dessen Ende sich eine zweite pneumatische Wirkfläche 80 befindet.

Der Druckregelkolben 62 weist im Übrigen eine radiale Außenfläche auf, in der Entlüftungskanäle 76 angeordnet sind. Die Entlüftungskanäle 76 sind winklig gleichmäßig in der radialen Außenfläche verteilt. Ferner erstrecken sich die Entlüftungskanäle 76 jeweils axial von dem dem Federaufnahmetopf 74 zugewandten Ende des Druckregelkolbens 62 bis annähernd zu der mehrteiligen Dichtung 63.

In der radialen Außenfläche des Druckregelkolbens 62 sind weiter Führungsflächen 77 angeordnet. Die Führungsflächen 77 sind ebenfalls winklig gleichmäßig in der radialen Außenfläche verteilt und benachbart zu den Entlüftungskanälen 76 angeordnet. Axial erstrecken sich die Führungsflächen 77 im Wesentlichen wie die Entlüftungskanäle 76.

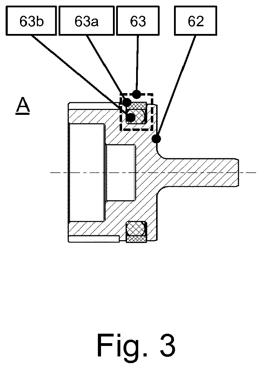

Fig. 3 zeigt eine schematische Querschnittsansicht des ersten Ausführungsbeispiels des Druckregelkolbens 62 gemäß Fig. 1 und 2.

Der Druckregelkolben 62 weist eine mehrteilige Dichtung 63 auf, die einen Außenring 63a und einen Innenring 63b umfasst. Der Druckregelkolben 62 umfasst zudem eine Radialnut, in der die mehrteilige Dichtung 63 geführt ist. Die mehrteilige Dichtung 63 kann ebenfalls aus mehr als zwei Dichtringen bestehen.

Dabei ist der Außenring 63a ein Hartdichtring. Der Hartdichtring ist als ein Teflon- oder Kunststoffring ausgebildet. Alternativ kann der Hartdichtring auch als teflonbeschichteter Kunststoffring ausgebildet sein. Weitere dem Fachmann bekannte Hartdichtringwerkstoffe oder Kombinationen davon können in diesem Zusammenhang ebenfalls eingesetzt werden.

Der Innenring 63b ist dagegen ein gummiartiger Dichtring. Diesbezüglich ist es denkbar, dass der Innenring 63b ein O-Ring ist. Werkstoffe des Innenrings 63b können Silikon oder Gummi sein. Andere dem Fachmann bekannte elastische Werkstoffe können in diesem Zusammenhang ebenfalls eingesetzt werden.

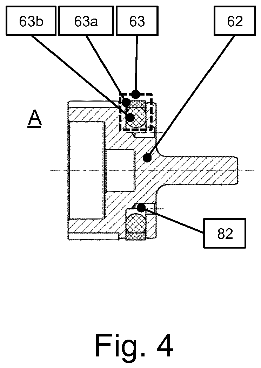

Fig. 4 zeigt eine schematische Querschnittsansicht eines zweiten Ausführungsbeispiels eines erfindungsgemäßen Druckregelkolbens 12 des Druckregelventils A (vgl. auch Fig. 5).

Der Druckregelkolben 12 weist bis auf die nachfolgend aufgezeigten strukturellen Unterschiede im Wesentlichen dieselben strukturellen Merkmale wie der in Fig. 1, 2 und 3 gezeigte Druckregelkolben 12 auf.

Die Radialnut des Druckregelkolbens 12 weist im Nutgrund eine pneumatische Verbindung auf. Die pneumatische Verbindung ist derart angeordnet, dass im montierten und betriebsfähigen Zustand des Druckregelventils A die mehrteilige Dichtung 63 durch den Druck aus der Druckregelkammer 65 radial nach außen drückbar ist. Die pneumatische Verbindung zwischen Nutgrund und Druckregelkammer 65 kann beispielsweise durch eine Druckregelkolbenbohrung 82 realisiert werden. Auch mehrere Druckregelkolbenbohrungen 82 oder andere Formgebungen sind denkbar.

Fig. 5 zeigt eine pneumatische Schaltungsanordnung des Druckregelventils A sowie des Entlastungsventils C gemäß Fig. 1 in einem Ausführungsbeispiel eines erfindungsgemäßen Luftaufbereitungssystems.

Das Luftaufbereitungssystem gemäß Fig. 5 weist das Druckregelventil A sowie das Entlastungsventil C auf. Ferner umfasst das Luftaufbereitungssystem einen Lufttrockner B (z.B. in Form einer Lufttrocknerkartusche) sowie ein Rückschlagventil D.

Des Weiteren umfasst das Luftaufbereitungssystem einen Kompressoranschluss 1, mittels dessen Druckluft von einem in Fig. 5 nicht dargestellten Kompressor zugeführt wird. Ein erster Auslassanschluss 21 des Luftaufbereitungssystems ist ebenfalls an dem Luftaufbereitungssystem vorgesehen. Der erste Auslassanschluss 21 des Luftaufbereitungssystems ist mit den im Nutzfahrzeug üblichen Druckluftabnehmern wie z.B. dem Mehrkreisschutzventil verbunden.

Der Kompressoranschluss 1 ist über eine Einlassleitung 51 des Lufttrockners B mit diesem verbunden. Stromabwärts des Lufttrockners B ist dessen Auslass über eine Auslassleitung 52 mit dem ersten Auslassanschluss 21 des Luftaufbereitungssystems verbunden. Das Rückschlagventil D ist stromabwärts des Auslasses des Lufttrockners B in dessen Auslassleitung 52 angeordnet.

Die Einlassleitung 51 des Lufttrockners B ist stromaufwärts von diesem verzweigt, wodurch der Einlassanschluss 57 des Entlastungsventils C mit der Einlassleitung 51 des Lufttrockners B verbunden ist. Über den Auslassanschluss 58 des Entlastungsventils C ist dieses zudem mit einem Hauptentlüftungsanschluss 3 des Luftaufbereitungssystems verbunden.

Stromabwärts des Lufttrockners B zwischen dessen Auslass und dem Rückschlagventil D ist ferner ein zweiter Aus- oder Einlassanschluss 22 abgezweigt.

Im Übrigen ist die Auslassleitung 52 des Lufttrockners B stromabwärts des Rückschlagventils D abgezweigt, wodurch der Druckluftanschluss 53, 54 des Druckregelventils A mit der Auslassleitung 52 des Lufttrockners B verbunden ist. Weiterhin umfasst das Druckregelventil A einen Entlüftungsanschluss 59, der mit einem weiteren Entlüftungsanschluss des Luftaufbereitungssystems verbunden ist.

Wie bereits vorstehend erläutert, weist das Druckregelventil A einen ersten Regelkanal 64 (vgl. Fig. 1) auf, mittels dessen die Gehäusekammer 55 mit der Druckregelkammer 65 (vgl. ebenfalls Fig. 1) verbindbar ist. Die Gehäusekammer 55 ist wiederum mittels eines zweiten Regelkanals 56 mit der Ablassventilkammer 66 des Entlastungsventils C verbunden(vgl. ebenfalls Fig. 1). Von der Gehäusekammer 55 kann zudem ein Kompressorsteueranschluss 4 abzweigen, mittels dessen die Gehäusekammer 55 mit einem Steuereingang eines nicht in Fig. 5 dargestellten Kompressors verbindbar ist.

Die Funktion des Druckregelventil A lässt sich nun wie folgt beschreiben:

Zunächst strömt Druckluft über den Kompressoranschluss 1 durch die Einlassleitung 51 zum Lufttrockner B (vgl. dazu Fig. 5), durchströmt diesen und strömt sodann durch das Rückschlagventil D und verlässt das Luftaufbereitungssystem über dessen ersten Auslassanschluss 21. Stromabwärts des Auslassanschlusses 21 werden die im Nutzfahrzeug üblichen Druckluftabnehmer mit Druckluft versorgt. Im Übrigen werden der Druckluftanschluss 53, 54 des Druckregelventils A sowie der Einlassanschluss 57 des Entlastungsventil C mit Druckluft beaufschlagt.

Die am Druckluftanschluss 53, 54 des Druckregelventils A anstehende Druckluft strömt zudem in die Druckregelkammer 65 ein und beaufschlagt diese ebenfalls mit Druckluft. Wenn sich der Druck in der Druckregelkammer 65 weiter erhöht, erfolgt eine axiale Verschiebung des Druckregelkolbens 62 ausgehend von seiner ersten Stellung in eine zweite Stellung. Während des Übergangs des Druckregelkolbens 65 von der ersten in die zweite Stellung überstreift die mehrteilige Dichtung 63 des Druckregelkolbens 62 die Öffnung des ersten Regelkanals 64. Folglich ist der erste Regelkanal 64 in der zweiten Stellung des Druckregelkolbens 62 mit der Druckregelkammer 65 verbunden. Der sogenannte Abschaltdruck des Druckregelventils A ist somit erreicht.

Die Druckluft kann also von der Druckregelkammer 65 über den ersten Regelkanal 64, die Gehäusekammer 55 sowie den zweiten Regelkanal 56 in die Ablassventilkammer 66 einströmen. Dort beaufschlagt die unter Druck stehende Ablassventilkammer 66 sodann den Entlastungsventilkolben 68 im Wesentlichen mit demselben Druck, wie er in der Druckregelkammer 65 vorherrscht.

Übersteigt die den Entlastungsventilkolben 68 beaufschlagende Druckkraft die in entgegengesetzte Richtung dazu wirkende Kraft der Feder 61, wird der Entlastungsventilkolben 68 axial verschoben. Infolgedessen öffnet sich der Ventilsitz 71, wodurch nun der Einlassanschluss 57 und der Auslassanschluss 58 des Entlastungsventils C miteinander verbunden sind. Die Verbindung von Einlassanschluss 57 und Auslassanschluss 58 hat zur Folge, dass die Einlassleitung 51 des Lufttrockners B über den mit dem Auslassanschluss 58 verbundenen Hauptentlüftungsanschluss 3 des Luftaufbereitungssystems entlüftet wird. Dadurch wird sämtliche über den Kompressoranschluss 1 zugeführte Druckluft wie zuvor beschrieben über den Hauptentlüftungsanschluss 3 entlüftet und das Belüfteten des Luftaufbereitungssystems wird unterbrochen. Ist die Gehäusekammer 55 zusätzlich mit einem Kompressorsteueranschluss 4 verbunden, wird dieser ebenfalls mit dem Abschaltdruck beaufschlagt. Der Abschaltdruck kann beispielsweise einer Steuereinheit des Kompressors direkt als Steuerdruck übergeben werden oder mittels eines Drucksensors in einen elektrisches Steuersignal umgewandelt werden. In Antwort auf den Steuerdruck oder das elektrische Steuersignal kann der Betrieb des Kompressors so lange eingestellt oder mit verringerter Leistung weitergeführt werden, bis das Luftaufbereitungssystem wieder mit Druckluft versorgt werden muss.

Aufgrund der Entlüftung der Einlassleitung 51 sowie dem temporären Betriebsstopp oder der Leistungsverringerung des Kompressors sinkt der Druck ebenfalls in der Auslassleitung 52 des Lufttrockners B sowie im ersten Auslassanschluss 21. Da der Druckluftanschluss 53, 54 des Druckregelventils mit der Auslassleitung 52 verbunden ist, sinkt der Druck folglich auch in der Druckregelkammer 65 des Druckregelventils A sowie in dem ersten Regelkanal 64, der Gehäusekammer 55, dem zweiten Regelkanal 56 sowie der Ablassventilkammer 66.

Sinkt der Druck innerhalb der Druckregelkammer 65 kontinuierlich ab, bewegt sich der Druckregelkolben 62 aufgrund der nun größeren Kraft der Feder 60 von der zweiten Stellung zurück in seine erste Stellung. Dabei überstreift die mehrteilige Dichtung 63 des Druckregelkolbens 62 erneut den ersten Regelkanal 64. Der erste Regelkanal 64 ist folglich in einer ersten Stellung des Druckregelkolbens 62 nicht mit der Druckregelkammer 65 verbunden. Der sogenannte Einschaltdruck des Druckregelventils A wird somit erreicht.

Sobald die mehrteilige Dichtung 63 des Druckregelkolbens 65 den ersten Regelkanal 64 überstreift, wird die Ablassventilkammer 66 über den zweiten Regelkanal 56, die Gehäusekammer 55, den ersten Regelkanal 64, die Entlüftungskanäle 76 des Druckregelkolbens 65 sowie dem damit verbundenen Entlüftungsanschluss 59 des Druckregelventils A entlüftet.

Sinkt durch diese Entlüftung der Druck innerhalb der Ablassventilkammer 66 insoweit ab, dass die Kraft der Feder 61 die Druckkraft innerhalb der Ablassventilkammer 66 übersteigt, bewegt sich der Entlastungsventilkolben in soweit zurück, bis der Ventilsitz 71 geschlossen ist. Der Einlassanschluss 57 sowie der Auslassanschluss 58 des Entlastungsventil A sind nun wieder voneinander getrennt, so dass es zu keinem weiteren Druckabfall innerhalb des Luftaufbereitungssystems kommen kann. Im Übrigen wird der Kompressorsteueranschluss 4 ebenfalls entlüftet, wodurch der Betrieb des Kompressors beispielsweise wieder aufgenommen werden kann.

Zusammenfassend kann also festgehalten werden, dass aufgrund der zuvor beschriebenen Funktionalität des Druckregelventils A an dem ersten Auslassanschluss 21 des Luftaufbereitungssystems ein Auslassdruck lediglich in einem Bereich zwischen dem Einschalt- und Abschaltdruck des Druckregelventils A anliegen kann.

Wie bereits vorstehend erläutert verfügt der Druckregelkolben 62 über einen Zapfen 79 mit einer zweiten pneumatischen Wirkfläche 80, welcher pneumatisch abgedichtet in die Ablassventilkammer hineinragt (vgl. Fig. 1). Allerdings muss der Zapfen 79 nicht zwangsläufig in die Ablassventilkammer 66 hineinragen. Für eine bestimmungsgemäße Funktionserfüllung ist es lediglich notwendig, dass die zweite pneumatische Wirkfläche 80 des Zapfens 79 mit der Ablassventilkammer 66 (zum Beispiel über einen separaten Anschluss, falls das Druckregelventil A sowie das Entlastungsventil C kein gemeinsames Gehäuse 75 aufweisen) in Verbindung steht.

Durch die Verbindung des Druckregelkolbens 62 sowohl mit der Druckregelkammer 65 als auch mit der Ablassventilkammer 66 über den Zapfen 79 Vergrößert die Hysterse des Druckregelventils A, wodurch sich dessen Regelungseigenschaften deutlich verbessern. Im Übrigen kann die Öffnungs- bzw. Schließcharakteristik des Druckregelventils A und des Entlastungsventil C über das Durchmesserverhältnis des ersten und zweiten Regelkanals 64, 56 sowie über den Durchmesser der Gehäusekammer 55 eingestellt werden.

### BEZUGSZEICHENLISTE

- 1: Kompressoranschluss
- 3: Hauptentlüftungsanschluss des Luftaufbereitungssystems
- 4: Kompressorsteueranschluss des Luftaufbereitungssystems
- 21: Erster Auslassanschluss des Luftaufbereitungssystems
- 22: Zweiter Aus- oder Einlassanschluss des Luftaufbereitungssystems
- 51: Einlassleitung des Lufttrockners
- 52: Auslassleitung des Lufttrockners
- 53: Druckluftanschluss
- 54: Druckluftanschluss
- 55: Gehäusekammer
- 56: Zweiter Regelkanal
- 57: Einlassanschluss des Entlastungsventils
- 58: Auslassanschluss des Entlastungsventils
- 59: Entlüftungsanschluss des Druckregelventils
- 60: Feder des Druckregelventils
- 61: Feder des Entlastungsventils
- 62: Druckregelkolben
- 63: Mehrteilige Dichtung
- 63a: Außenring der mehrteiligen Dichtung
- 63b: Innenring der mehrteiligen Dichtung
- 64: Erster Regelkanal
- 65: Druckregelkammer
- 66: Ablassventilkammer
- 67: Dichtring
- 68: Entlastungsventilkolben
- 69: Dichtring des Entlastungsventilkolbens
- 70: Dichtscheibe des Entlastungsventilkolbens
- 71: Ventilsitz des Entlastungsventils
- 72: Einstellschraube des Druckregelventils
- 73: Federteller des Druckregelventils
- 74: Federaufnahmetopf des Druckregelventils
- 75: Gehäuse
- 76: Be- oder Entlüftungskanäle
- 77: Führungsflächen
- 78: Erste pneumatische Wirkfläche
- 79: Zapfen
- 80: Zweite pneumatische Wirkfläche
- 81: Federkammer des Druckregelventils
- 82: Druckregelkolbenbohrung

- A: Druckregelventil
- B: Lufttrockner
- C: Entlastungsventil
- D: Rückschlagventil

## Patentansprüche

1. Druckregelventil (A) für ein Luftaufbereitungssystem eines Nutzfahrzeugs mit einem Gehäuse (75), mit wenigstens einem Druckluftanschluss (53, 54) und mit wenigstens einer ersten Druckregelkammer (65), in die der Druckanschluss (53, 54) mündet, wobei die Druckregelkammer (65) ein variables Volumen hat, das durch wenigstens einen Wandabschnitt des Gehäuses (75) und eine erste pneumatische Wirkfläche (78) eines verschieblich im Gehäuse (75) geführten Druckregelkolbens (62) begrenzt wird, wobei weiter ein erster Regelkanal (64) vorgesehen ist, der in wenigstens einer ersten Stellung des Druckregelkolbens (62) nicht mit der Druckregelkammer (65) verbunden ist und in wenigstens einer zweiten Stellung des Druckregelkolbens (62) mit der Druckregelkammer (65) verbunden ist, wobei der Druckregelkolben (62) weiter einen Zapfen (79) aufweist, der sich aus der ersten pneumatischen Wirkfläche (78) des Druckregelkolbens (62) erhebt und an dessen Ende sich eine zweite pneumatische Wirkfläche (80) befindet, wobei der Zapfen (79) pneumatisch abgedichtet durch den Wandabschnitt beweglich hindurchgeführt ist.

2. Druckregelventil (A) nach Anspruch 1,
**dadurch gekennzeichnet, dass**
die erste pneumatische Wirkfläche (78) und die zweite pneumatische Wirkfläche (80) auf derselben Seite des Druckregelkolbens (62) angeordnet sind.

3. Druckregelventil (A) nach Anspruch 1 oder Anspruch 2,
**dadurch gekennzeichnet, dass**
die erste pneumatische Wirkfläche (78) und die zweite pneumatische Wirkfläche (80) dieselbe Ausrichtung haben.

4. Druckregelventil (A) nach einem der vorhergehenden Ansprüche,
**dadurch gekennzeichnet, dass**
die zweite pneumatische Wirkfläche (80) des Druckregelkolbens (62) in eine Ablassventilkammer (66) hineinragt.

5. Druckregelventil (A) nach einem der vorhergehenden Ansprüche,
**dadurch gekennzeichnet, dass**
der Druckregelkolben (62) eine radiale Außenfläche aufweist, in der Be- oder Entlüftungskanäle (76) und Führungsflächen (77) angeordnet sind.

6. Druckregelventil (A) nach einem der vorhergehenden Ansprüche,
**dadurch gekennzeichnet, dass**
die pneumatische Abdichtung durch einen Dichtring (67), insbesondere einen O-Ring oder einen aufvulkanisierten Dichtring, ausgebildet ist.

7. Druckregelventil (A) nach einem der vorhergehenden Ansprüche,
**dadurch gekennzeichnet, dass**
zwischen der Wand der Druckregelkammer (65), die durch das Gehäuse (75) ausgebildet ist, und dem Druckregelkolben (62) eine mehrteilige Dichtung (63) vorgesehen ist.

8. Druckregelventil (A) nach Anspruch 7,
**dadurch gekennzeichnet, dass**
die mehrteilige Dichtung wenigstens einen Außenring (63a) und einen Innenring (63b) aufweist.

9. Druckregelventil (A) nach Anspruch 7,
**dadurch gekennzeichnet, dass**
der Außenring (63a) ein Hartdichtring ist und dass der Innenring (63b) ein gummiartiger Dichtring ist, insbesondere wobei der Hartdichtring ein Teflon- und/oder Kunststoffring ist und insbesondere wobei der Innenring (63b) ein O-Ring, beispielsweise ein Silikon-oder Gummi-O-Ring ist.

10. Druckregelventil (A) nach einem der Ansprüche 7 bis 9,
**dadurch gekennzeichnet, dass**
der Druckregelkolben (62) eine Radialnut aufweist, in der die mehrteilige Dichtung geführt ist.

11. Druckregelventil (A) nach Anspruch 10,
**dadurch gekennzeichnet, dass**
die Radialnut im Nutgrund eine pneumatische Verbindung aufweist, so dass eine pneumatische Verbindung zwischen Druckregelkammer (65) und Radialnut herstellbar ist.

12. Druckregelventil (A) nach Anspruch 11,
**dadurch gekennzeichnet, dass**
die pneumatische Verbindung derart angeordnet ist, dass im montierten und betriebsfähigen Zustand des Druckregelventils (A) die mehrteilige Dichtung (63) durch den Druck aus der Druckregelkammer (65) radial nach außen drückbar ist.

13. Druckregelventil (A) nach einem der vorhergehenden Ansprüche,
**dadurch gekennzeichnet, dass**
der Druckregelkolben (62) einstückig ausgebildet ist.

## Claims

1. Pressure regulation valve (A) for an air treatment system of a utility vehicle, with a housing (75), with at least one compressed-air connection (53, 54) and with at least one first pressure regulation chamber (65) into which the pressure connection (53, 54) opens, wherein the pressure regulation chamber (65) has a variable volume delimited by at least one wall section of the housing (75) and by a first pneumatically effective surface (78) of a pressure regulation piston (62) that is guided and can move in the housing (75), and furthermore wherein a first regulation channel (64) is provided, which in at least one first position of the pressure regulation piston (62) is not connected to the pressure regulation chamber (65) and in at least one second position of the pressure regulation piston (62) is connected to the pressure regulation chamber (65), wherein the pressure regulation piston (62) also comprises a peg (79) which protrudes out of the said first pneumatically effective surface (78) of the pressure regulation piston (62) and at the end of which there is a second pneumatically effective surface (80), such that the peg (79) extends through the said wall section in a pneumatically sealed manner .

2. Pressure regulation valve (A) according to Claim 1,
**characterised in that**
the first pneumatically effective surface (78) and the second pneumatically effective surface (80) are arranged on the same side of the pressure regulation piston (62).

3. Pressure regulation valve (A) according to Claims 1 or 2,
**characterised in that**
the first pneumatically effective surface (78) and the second pneumatically effective surface (80) have the same orientation.

4. Pressure regulation valve (A) according to any of the preceding claims,
**characterised in that**
the second pneumatically effective surface (80) of the pressure regulation piston (62) extends into a discharge valve chamber (66).

5. Pressure regulation valve (A) according to any of the preceding claims,
**characterised in that**
the pressure regulation piston (62) has a radial outer surface in or on which aeration or venting ducts (76) and guiding surfaces (77) are formed.

6. Pressure regulation valve (A) according to any of the preceding claims,
**characterised in that**
the pneumatic seal is formed by a sealing ring (67), in particular an O-ring or a vulcanised sealing ring.

7. Pressure regulation valve (A) according to any of the preceding claims,
**characterised in that**
between the wall of the pressure regulation chamber (65) formed by the housing (75) and the pressure regulation piston (62), a multi-component seal (63) is provided.

8. Pressure regulation valve (A) according to Claim 7,
**characterised in that**
the multi-component seal comprises at least one outer ring (63a) and an inner ring (63b).

9. Pressure regulation valve (A) according to Claim 7,
**characterised in that**
the outer ring (63a) is a hard sealing ring and the inner ring (63b) is a rubber-like sealing ring, in particular wherein the hard ring is a Teflon and/or a plastic ring and in particular wherein the inner ring (63b) is an O-ring, for example a silicone or rubber O-ring.

10. Pressure regulation valve (A) according to any of Claims 7 to 9,
**characterised in that**
the pressure regulation piston (62) has a radial groove into which the multi-component seal is fitted.

11. Pressure regulation valve (A) according to Claim 10,
**characterised in that**
in the groove bottom the radial groove has a pneumatic connection, so that a pneumatic connection can be formed between the pressure regulation chamber (65) and the radial groove.

12. Pressure regulation valve (A) according to Claim 11,
**characterised in that**
the pneumatic connection is arranged in such manner that in the assembled and operationally ready condition of the pressure regulation valve (A), the multi-component seal (63) can be pressed radially outward by the pressure from the pressure regulation chamber (65).

13. Pressure regulation valve (A) according to any of the preceding claims,
**characterised in that**
the pressure regulation piston is formed integrally, as one piece.

## Revendications

1. Soupape (A) de régulation de la pression d'un système de traitement d'air d'un véhicule utilitaire, comprenant un corps (75), ayant au moins un raccord (53, 54) pour de l'air comprimé et ayant au moins une première chambre (65) de régulation de la pression, dans laquelle le raccord (53, 54) de pression débouche, la chambre (65) de régulation de la pression ayant un volume variable, qui est délimité par au moins une partie de paroi du corps (75) et une première surface (78) active pneumatique d'un piston (62) de réglage de la pression guidé à coulissement dans le corps (75), dans laquelle il est prévu, en outre, un premier conduit (64) de régulation, qui, dans au moins une première position du piston (62) de régulation de la pression, ne communique pas avec la chambre (65) de régulation de la pression et, dans au moins une deuxième position du piston (62) de régulation de la pression, communique avec la chambre (65) de régulation de la pression, le piston (62) de régulation de la pression ayant, en outre, un tenon (79), qui s'élève de la première surface (78) active pneumatique du piston (62) de régulation de la pression et à l'extrémité duquel se trouve une deuxième surface (80) active pneumatique, le tenon (79) étant, en étant rendu étanche pneumatiquement, mobile à travers la partie de paroi.

2. Soupape (A) de régulation de la pression suivant la revendication 1,
**caractérisée en ce que**
la première surface (78) active pneumatique et la deuxième surface (80) active pneumatique sont disposées du même côté du piston (62) de régulation de la pression.

3. Soupape (A) de régulation de la pression suivant la revendication ou la revendication 2,
**caractérisée en ce que**
la première surface (78) active pneumatique et la deuxième surface (80) active pneumatique ont la même orientation.

4. Soupape (A) de régulation de la pression suivant l'une des revendications précédentes,
**caractérisée en ce que**
la deuxième surface (80) active pneumatique du piston (62) de régulation de la pression pénètre dans une chambre (66) d'une soupape d'évacuation.

5. Soupape (A) de régulation de la pression suivant l'une des revendications précédentes,
**caractérisée en ce que**
le piston (62) de régulation de la pression a une surface extérieure radiale, dans laquelle sont disposés des conduits (76) d'alimentation en air ou de purge et des surfaces (77) de guidage.

6. Soupape (A) de régulation de la pression suivant l'une des revendications précédentes,
**caractérisée en ce que**
l'étanchéité pneumatique est constituée par une bague (67) d'étanchéité, notamment un joint torique ou une bague d'étanchéité vulcanisée.

7. Soupape (A) de régulation de la pression suivant l'une des revendications précédentes,
**caractérisée en ce qu'**
une garniture (63) d'étanchéité en plusieurs parties est prévue entre la paroi de la chambre (65) de régulation de la pression constituée par le corps (75) et le piston (62) de régulation de la pression.

8. Soupape (A) de régulation de la pression suivant la revendication 7,
**caractérisée en ce que** la garniture d'étanchéité en plusieurs parties a au moins une bague (63a) extérieure et une bague (63b) intérieure.

9. Soupape (A) de régulation de la pression suivant la revendication 7,
**caractérisée en ce que**
la bague (63a) extérieure est une bague d'étanchéité dure et **en ce que** la bague (63b) intérieure est une bague d'étanchéité de type caoutchouc, dans laquelle notamment la bague d'étanchéité dure est une bague en téflon et/ou en matière plastique et dans laquelle notamment la bague (63b) intérieure est un joint torique, par exemple un joint torique en silicone ou en caoutchouc.

10. Soupape (A) de régulation de la pression suivant l'une des revendications 7 à 9,
**caractérisée en ce que**
le piston (62) de régulation de la pression a une rainure radiale, dans laquelle passe la garniture d'étanchéité en plusieurs parties.

11. Soupape (A) de régulation de la pression suivant la revendication 10,
**caractérisée en ce que**
la rainure radiale a, au fond de la rainure, une liaison pneumatique, de manière à pouvoir produire une liaison pneumatique entre la chambre (65) de régulation de la pression et la rainure radiale.

12. Soupape (A) de régulation de la pression suivant la revendication 11,
**caractérisée en ce que**
la liaison pneumatique est disposée de manière à ce que, lorsque la soupape (A) de régulation de la pression est à l'état monté et prête à fonctionner, la garniture (63) d'étanchéité en plusieurs parties peut, par la pression, être poussée vers l'extérieur radialement hors de la chambre (65) de régulation de la pression.

13. Soupape (A) de régulation de la pression suivant l'une des revendications précédentes,
**caractérisée en ce que**
le piston (62) de régulation de la pression est constitué d'une seule pièce.
